# EUROPEAN PATENT APPLICATION

(11) **EP 4 763 471 A1**
(43) Date of publication of application: **24.06.2026**
(21) Application number: 24870327.4
(22) Date of filing: 30.08.2024
(51) Int. Cl.: B29C 48/30

(54) **BLOW-FILL-SEAL ALL-IN-ONE MACHINE**

(30) Priority: 25.09.2023 CN 202322610220 U
(71) Applicant: Truking Technology Limited, Changsha, Hunan 410600 (CN)
(72) Inventor: MAI, Zhizi, Changsha, Hunan 410600 (CN); XU, Haiwen, Changsha, Hunan 410600 (CN); CHEN, Hengshan, Changsha, Hunan 410600 (CN)
(74) Representative: Lorenz Seidler Gossel Part. mbB
(86) International application number: PCT/CN2024/115811
(87) International publication number: WO 2025/066781

(57) **Abstract**

A blow-fill-seal integrated machine, comprising a base frame (1), wherein the base frame (1) is provided with an extrusion screw (2) and an extrusion die head (3) detachably connected to the extrusion screw (2), the extrusion die head (3) comprises a first extrusion die head (31) and a second extrusion die head (32), both the first extrusion die head (31) and the second extrusion die head (32) are of a translatable structure so as to be respectively connected to the extrusion screw (2), and the base frame (1) is provided with a guide structure for guiding translation of the first extrusion die head (31) and the second extrusion die head (32). When bottles with a first center distance are produced, the first extrusion die head (31) is connected to the extrusion screw (2); and when bottles with a second center distance need to be produced, the first extrusion die head (31) is first disconnected from the extrusion screw (2), then the first extrusion die head (31) is translated to separate from the extrusion screw (2), and the second extrusion die head (32) is translated into position and connected to the extrusion screw (2). The guide structure may provide guidance for the translation of the first extrusion die head (31) and the second extrusion die head (32), which ensures a stable and smooth translation process and prevents deviation, thereby enabling rapid center distance change and reducing the risk of compromising the sealing performance and aseptic property of the machine during disassembly and replacement.

## Description

### CROSS-REFERENCE TO RELATED APPLICATIONS

The application is based on and claims priorities to Chinese Patent Application No. 202322610220.3, filed on September 25, 2023, entitled "blow-fill-seal integrated machine", which is incorporated herein by reference in its entirety, as one part of the application.

### TECHNICAL FIELD

The present invention relates to packaging machinery and equipment for food and pharmaceuticals, and particularly to a blow-fill-seal integrated machine.

### BACKGROUND

A continuous blow-fill-seal integrated machine enables a closed, aseptic and continuous production process that integrates extrusion, forming, filling, sealing and demolding in one step. Currently, most machines available on the market are rotary multi-mold continuous, single-station single-mold or double-station double-mold blow-fill-seal integrated machines. In all these machines, one extruder is paired with one set of extrusion die head and filling mechanism. Accordingly, such machines can only produce ampoules with a single center distance. When ampoules with other center distances are required, manufacturers need to prepare multiple machines. Moreover, the disassembly and replacement operations are rather cumbersome, and there is a risk of compromising the sealing performance and aseptic property of the machines.

### SUMMARY

To overcome the deficiencies in the prior art, the present invention provides a blow-fill-seal integrated machine that has a simple structure, is convenient to use, and helps to reduce machine costs.

To solve the aforementioned technical problems, the technical solution adopted by the present invention is as follows:
The embodiments of the present invention disclose a blow-fill-seal integrated machine, comprising a base frame, wherein the base frame is provided with an extrusion screw and an extrusion die head detachably connected to the extrusion screw, the extrusion die head comprises a first extrusion die head and a second extrusion die head, both the first extrusion die head and the second extrusion die head are of a translatable structure so as to be respectively connected to the extrusion screw, and the base frame is provided with a guide structure for guiding translation of the first extrusion die head and the second extrusion die head.

In some embodiments of the present invention, the extrusion screw is of an axially translatable structure, and a translation direction of the first extrusion die head and the second extrusion die head is perpendicular to an axial direction of the extrusion screw.

In some embodiments of the present invention, the base frame is provided with a first translation guide rail arranged along the axial direction of the extrusion screw, the first translation guide rail is provided with a first slide base, and the extrusion screw is disposed on the first slide base.

In some embodiments of the present invention, the base frame is further provided with a first translation drive mechanism.

In some embodiments of the present invention, the first translation drive mechanism comprises a first drive rack arranged along the axial direction of the extrusion screw, the first slide base is provided with a first drive gear, and the first drive gear meshes with the first drive rack.

In some embodiments of the present invention, the first extrusion die head is provided with a first filling mechanism, and the second extrusion die head is provided with a second filling mechanism.

In some embodiments of the present invention, the guide structure comprises a second translation guide rail, the second translation guide rail is perpendicular to the axial direction of the extrusion screw, the second translation guide rail is provided with a second slide base, and the first extrusion die head and the second extrusion die head are disposed on the second slide base.

In some embodiments of the present invention, the base frame is further provided with a second translation drive mechanism.

In some embodiments of the present invention, the second translation drive mechanism comprises a second drive rack, the second drive rack is perpendicular to the axial direction of the extrusion screw, the second slide base is provided with a second drive gear, and the second drive gear meshes with the second drive rack.

In some embodiments of the present invention, both ends of the second translation guide rail are provided with positioning components.

Compared with the prior art, the present invention has the following advantages: according to the blow-fill-seal integrated machine provided by the present invention, when bottles with a first center distance are produced, the first extrusion die head is connected to the extrusion screw; and when bottles with a second center distance need to be produced, the first extrusion die head is first disconnected from the extrusion screw, then the first extrusion die head is translated to separate from the extrusion screw, and the second extrusion die head is translated into position and connected to the extrusion screw. The guide structure may provide guidance for the translation of the first extrusion die head and the second extrusion die head, which ensures a stable and smooth translation process, and prevents deviation, thereby enabling rapid center distance change and reducing the risk of compromising the sealing performance and aseptic property of the machine during disassembly and replacement. The machine has a simple structure and is convenient to use.

### BRIEF DESCRIPTION OF THE DRAWINGS

FIG. 1 is a schematic diagram of a three-dimensional structure of a blow-fill-seal integrated machine according to the present invention from a first perspective;
FIG. 2 is a schematic diagram of a three-dimensional structure of a blow-fill-seal integrated machine according to the present invention from a second perspective;
FIG. 3 is a schematic side view of a blow-fill-seal integrated machine according to the present invention;
FIG. 4 is a schematic structural diagram of a first extrusion die head according to the present invention when used for producing a single row of 15 bottles; and
FIG. 5 is a schematic structural diagram of a second extrusion die head according to the present invention when used for producing a single row of 20 bottles.

Description of reference numerals in the drawings:
1: base frame; 11: first translation guide rail; 12: first slide base; 13: second translation guide rail; 14: second slide base; 2: extrusion screw; 3: extrusion die head; 31: first extrusion die head; 32: second extrusion die head; 41: first drive rack; 42: first drive gear; 51: second drive rack; 52: second drive gear; 6: positioning component; 71: first filling mechanism; 72: second filling mechanism; 8: forming mold; 100: bottle; and 101: bottle sheet.

### DETAILED DESCRIPTION OF THE EMBODIMENTS

In the description of the invention, it should be noted that orientation or positional relationships indicated by the terms "up," "left," "right," and "inside," and similar are based on the orientation or positional relationships shown in the accompanying drawings, and are for convenience of describing the invention and simplifying the description only, rather than indicating or implying that the device or element referred to must have a specific orientation or be constructed and operated in a specific orientation, and therefore should not be construed as limiting the invention.

Besides, terms such as "First", "second" and similar used in the invention do not indicate any sequence, quantity or importance and are only used for distinguishing different components. Accordingly, features defined as 'first' or "second" may explicitly or implicitly include one or more instances of said feature. Throughout the description of the present invention, the term 'multiple' denotes two or more instances, unless otherwise explicitly and specifically defined.

In present invention, unless otherwise explicitly defined or limited, terms such as "connect" shall be interpreted broadly. For example, it may refer to a fixed connection, a detachable connection, or an integral structure; it may denote a mechanical connection or an electrical connection; it may involve direct connection or indirect connection through an intermediary; and it may describe internal communication between two components or the interactive relationship between two components. For those skilled in the art, the specific meaning of the above terms in this application can be understood based on the particular circumstances.

The following provides a further detailed description of the present invention with reference to the accompanying drawings and specific embodiments.

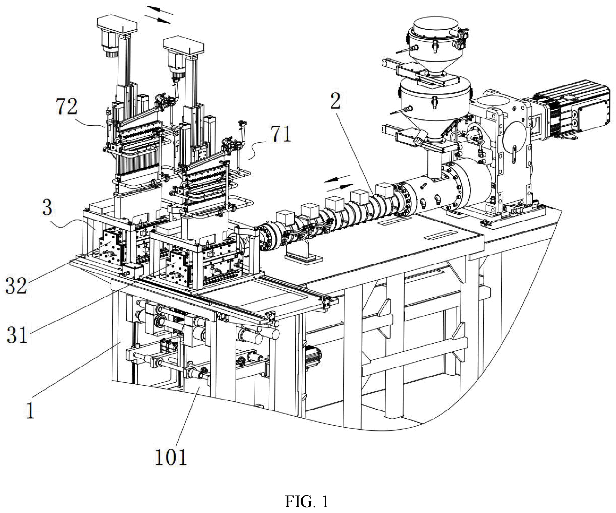

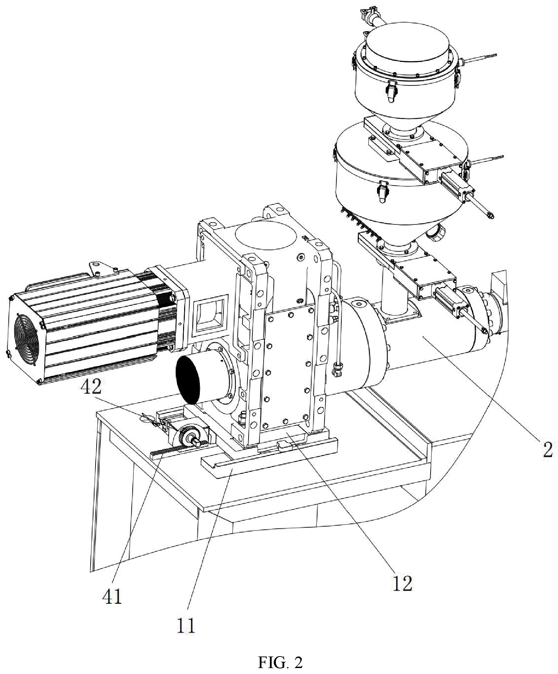

FIG. 1 to FIG. 3 show an embodiment of the present invention. A blow-fill-seal integrated machine in this embodiment includes a base frame 1. The base frame 1 is provided with an extrusion screw 2 and an extrusion die head 3 detachably connected to the extrusion screw 2 (e.g., via a fastener or the like). The extrusion die head 3 includes a first extrusion die head 31 and a second extrusion die head 32. Both the first extrusion die head 31 and the second extrusion die head 32 are of a translatable structure so as to be respectively connected to the extrusion screw 2. The base frame 1 is provided with a guide structure for guiding translation of the first extrusion die head 31 and the second extrusion die head 32.

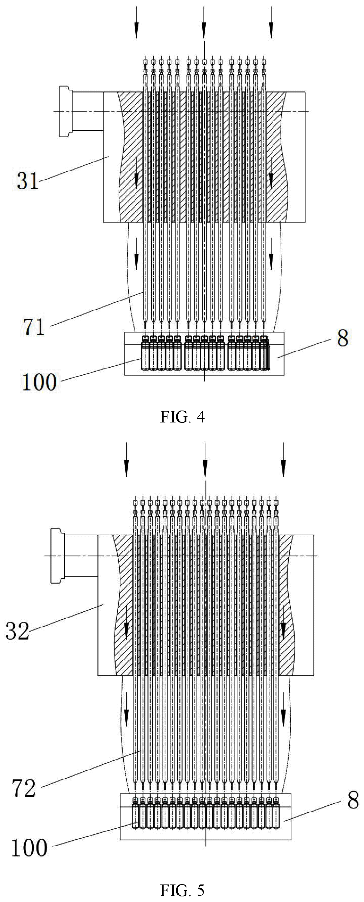

According to the blow-fill-seal integrated machine in this embodiment, when bottles 100 with a first center distance are produced, the first extrusion die head 31 is connected to the extrusion screw 2. Specifically, as shown in FIG. 4, there are 15 bottles 100 arranged in a single row with a large center distance. When bottles 100 with a second center distance need to be produced, the first extrusion die head 31 is first disconnected from the extrusion screw 2, then the first extrusion die head 31 is translated to separate from the extrusion screw 2, and the second extrusion die head 32 is translated into position and connected to the extrusion screw 2. Specifically, as shown in FIG. 5, there are 20 bottles 100 arranged in a single row with a small center distance. The guide structure may provide guidance for the translation of the first extrusion die head 31 and the second extrusion die head 32, which ensures a stable and smooth translation process and prevents deviation, thereby enabling rapid center distance change and reducing the risk of compromising the sealing performance and aseptic property of the machine during disassembly and replacement. The machine has a simple structure and is convenient to use. Certainly, in other embodiments, the extrusion die head 3 may further include a third extrusion die head, a fourth extrusion die head, and the like, for producing bottles 100 with a third center distance, a fourth center distance, and the like, which will not be repeated.

Further, in this embodiment, the extrusion screw 2 is of an axially translatable structure, and a translation direction of the first extrusion die head 31 and the second extrusion die head 32 is perpendicular to an axial direction of the extrusion screw 2. After the first extrusion die head 31 is disconnected from the extrusion screw 2, the extrusion screw 2 moves axially away from the first extrusion die head 31, thereby disconnecting from the first extrusion die head 31. After the second extrusion die head 32 is translated into position, the extrusion screw 2 moves axially to return to its original position and then is connected to the second extrusion die head 32. This is advantageous for preventing interference or collision between the first extrusion die head 31 or the second extrusion die head 32 and the extrusion screw 2 during translation, further enhancing reliability. The translation direction of the first extrusion die head 31 and the second extrusion die head 32 is perpendicular to the axial direction of the extrusion screw 2, which is advantageous for achieving accurate connection between the first extrusion die head 31 or the second extrusion die head 32 and the extrusion screw 2.

Furthermore, in this embodiment, the base frame 1 is provided with a first translation guide rail 11 arranged along the axial direction of the extrusion screw 2, the first translation guide rail 11 is provided with a first slide base 12, and the extrusion screw 2 is disposed on the first slide base 12. The first translation guide rail 11 may provide guidance for translation of the first slide base 12, making the translation of the first slide base 12 smoother and avoiding deviation. The extrusion screw 2 moves synchronously with the first slide base 12. The structure is simple and effective.

Furthermore, in this embodiment, the base frame 1 is further provided with a first drive rack 41 arranged along the axial direction of the extrusion screw 2, the first slide base 12 is provided with a first drive gear 42, and the first drive gear 42 meshes with the first drive rack 41. When the extrusion screw 2 needs to translate axially, the first drive gear 42 rotates (e.g., driven by a motor or the like), and cooperates with the first drive rack 41 to drive the first slide base 12 to move along the first translation guide rail 11. The first translation drive mechanism adopts a gear-rack pair, which is technically mature and highly reliable. Certainly, in other embodiments, the first translation drive mechanism may also adopt an air cylinder, a screw-nut pair, or the like, which will not be repeated.

As a preferred embodiment, the first extrusion die head 31 is provided with a first filling mechanism 71, and the second extrusion die head 32 is provided with a second filling mechanism 72. A process for filling an ampoule bottle with medicinal liquid via a filling needle needs to be performed in a tubular plastic blank extruded by the extrusion die head 3, thereby ensuring a closed aseptic environment. By disposing the first filling mechanism 71 on the first extrusion die head 31 and the second filling mechanism 72 on the second extrusion die head 32, synchronous translation and replacement of the extrusion die head 3 and the corresponding filling mechanism can be achieved, further improving the convenience of use.

Further, in this embodiment, the guide structure includes a second translation guide rail 13, where the second translation guide rail 13 is perpendicular to the axial direction of the extrusion screw 2, the second translation guide rail 13 is provided with a second slide base 14, and the first extrusion die head 31 and the second extrusion die head 32 are disposed on the second slide base 14. The second translation guide rail 13 may provide guidance for translation of the second slide base 14, making the translation of the second slide base 14 smoother and avoiding deviation. The first extrusion die head 31 and the second extrusion die head 32 move synchronously with the second slide base 14, with the moving direction being perpendicular to the axial direction of the extrusion screw 2. The structure is simple and effective. Certainly, in other embodiments, the first extrusion die head 31 and the second extrusion die head 32 may also move respectively along the second translation guide rail 13.

Furthermore, in this embodiment, the base frame 1 is further provided with a second drive rack 51, the second drive rack 51 is perpendicular to the axial direction of the extrusion screw 2, the second slide base 14 is provided with a second drive gear 52, and the second drive gear 52 meshes with the second drive rack 51. When the center distance needs to be changed, the second drive gear 52 rotates (e.g., driven by a motor or the like), and cooperates with the second drive rack 51 to drive the second slide base 14 to move along the second translation guide rail 13. The second translation drive mechanism adopts a gear-rack pair, which is technically mature and highly reliable. Certainly, in other embodiments, the second translation drive mechanism may also adopt an air cylinder, a screw-nut pair, or the like, which will not be repeated.

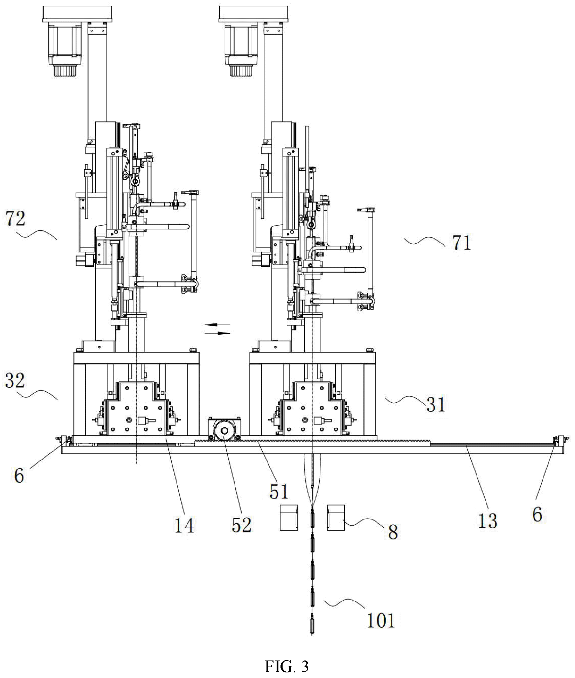

As a preferred embodiment, both ends of the second translation guide rail 13 are provided with positioning components 6. Specifically referring to FIG. 3, when the second extrusion die head 32 is in contact with the positioning component 6 on a left side of the second translation guide rail 13, the first extrusion die head 31 is exactly at a position where it is connected to the extrusion screw 2; and when the first extrusion die head 31 is translated and is in contact with the positioning component 6 on a right side of the second translation guide rail 13, the second extrusion die head 32 is exactly at a position where it is connected to the extrusion screw 2. This facilitates rapid and accurate connection between extrusion die head 3 and extrusion screw 2.

Although the present invention is disclosed as above in preferred embodiments, which are not intended to limit the present invention. any technical solutions falling within the scope of the present invention's conceptual scheme shall be deemed to fall within the scope of protection of the invention. Without departing from the contents of the technical solutions of the present invention, any changes and modifications made to the embodiments above based on the technical essence of the present invention shall be construed as falling within the protection scope of the technical solutions of the present invention.

## Claims

1. A blow-fill-seal integrated machine, comprising a base frame (1), **characterized in that**: the base frame (1) is provided with an extrusion screw (2) and an extrusion die head (3) detachably connected to the extrusion screw (2), the extrusion die head (3) comprises a first extrusion die head (31) and a second extrusion die head (32), both the first extrusion die head (31) and the second extrusion die head (32) are of a translatable structure so as to be respectively connected to the extrusion screw (2), and the base frame (1) is provided with a guide structure for guiding translation of the first extrusion die head (31) and the second extrusion die head (32).

2. The blow-fill-seal integrated machine according to claim 1, **characterized in that**: the extrusion screw (2) is of an axially translatable structure, and a translation direction of the first extrusion die head (31) and the second extrusion die head (32) is perpendicular to an axial direction of the extrusion screw (2).

3. The blow-fill-seal integrated machine according to claim 2, **characterized in that**: the base frame (1) is provided with a first translation guide rail (11) arranged along the axial direction of the extrusion screw (2), the first translation guide rail (11) is provided with a first slide base (12), and the extrusion screw (2) is disposed on the first slide base (12).

4. The blow-fill-seal integrated machine according to claim 3, **characterized in that**: the base frame (1) is further provided with a first translation drive mechanism.

5. The blow-fill-seal integrated machine according to claim 4, **characterized in that**: the first translation drive mechanism comprises a first drive rack (41) arranged along the axial direction of the extrusion screw (2), the first slide base (12) is provided with a first drive gear (42), and the first drive gear (42) meshes with the first drive rack (41).

6. The blow-fill-seal integrated machine according to claim 1, **characterized in that**: the first extrusion die head (31) is provided with a first filling mechanism (71), and the second extrusion die head (32) is provided with a second filling mechanism (72).

7. The blow-fill-seal integrated machine according to any one of claims 1 to 6, **characterized in that**: the guide structure comprises a second translation guide rail (13), the second translation guide rail (13) is perpendicular to the axial direction of the extrusion screw (2), the second translation guide rail (13) is provided with a second slide base (14), and the first extrusion die head (31) and the second extrusion die head (32) are disposed on the second slide base (14).

8. The blow-fill-seal integrated machine according to claim 7, **characterized in that**: the base frame (1) is further provided with a second translation drive mechanism.

9. The blow-fill-seal integrated machine according to claim 8, **characterized in that**: the second translation drive mechanism comprises a second drive rack (51), the second drive rack (51) is perpendicular to the axial direction of the extrusion screw (2), the second slide base (14) is provided with a second drive gear (52), and the second drive gear (52) meshes with the second drive rack (51).

10. The blow-fill-seal integrated machine according to claim 7, **characterized in that**: both ends of the second translation guide rail (13) are provided with positioning components (6).
